# DEMANDE DE BREVET EUROPEEN

(11) **EP 1 788 760 A1**
(43) Date de publication de la demande: **23.05.2007**
(21) Numéro de dépôt: 06290646.6
(22) Date de dépôt: 20.04.2006
(51) Int. Cl.: H04L 12/56

(54) **Systéme et procédé de routage statique de flux de paquets de données dans un réseau d'interconnexion**

(30) Priorité: 16.11.2005 FR 0511591
(71) Demandeur: ARTERIS, 78280 Guyancourt (FR)
(72) Inventeur: Kok, Sophana, 78960 Voisins Le Bretonneux (FR); Boucard, Philippe, 78150 Le Chesnay (FR)
(74) Mandataire: Casalonga, Axel

(57) **Abrégé**

Le système de routage statique de flux de paquets de données dans un réseau d'interconnexions comprend :
- au moins un élément émetteur (2), un élément récepteur (3), et un faisceau (4) de liens de communication unidirectionnels reliant ledit élément émetteur (2) audit élément récepteur (3),
- des moyens de détection (9) d'un identifiant de flux d'un paquet de données, et
- des moyens de gestion de routage dynamique (8), adaptés pour maintenir l'ordre de sortie de paquets de données d'un même flux dudit élément récepteur (3) identique à l'ordre d'arrivée desdits paquets audit élément émetteur (2).

## Description

La présente invention porte sur un système et un procédé de routage statique de flux de paquets de données dans un réseau d'interconnexion.

Un réseau d'interconnexion relie un ensemble d'agents qui échangent des données. Ces données sont mises en forme pour être transmises dans le réseau en utilisant un protocole de communication prédéfini.

Le réseau comprend un ensemble de liens unidirectionnels point à point reliant entre eux des noeuds internes du réseau et des agents du réseau. Chaque noeud du réseau est capable de recevoir des informations sous forme de données sur un ou plusieurs liens entrants, et de les rediriger sur un ou plusieurs liens sortants. Une information est donc contenue dans une suite de bits ou d'octets regroupés sous forme de paquets de données.

Un lien est un ensemble de fils et de portes logiques permettant l'acheminement des données entre deux éléments ou agents du réseau. Les données sont transférées sous forme de mots de taille définie, dans un ordre défini. Généralement, les transferts de données sont cadencés par des fréquences de cadencement d'horloge, une fréquence de cadencement d'horloge en émission, et une fréquence de cadencement d'horloge en réception.

Etablir des liens directs entre chaque couple d'agents du réseau serait trop coûteux, donc on restreint le nombre de liens en réalisant des sections communes de transmission de données dans le réseau. Il existe des agents spécialisés pour effectuer un routage ou aiguillage des messages circulant sur le réseau d'interconnexion, appelés commutateurs ("switch" en langue anglaise).

De tels réseaux comprennent une organisation du réseau assurant le lien entre les commutateurs et les autres agents, et un ensemble de routage qui assure la circulation des messages au sein de l'organisation du réseau.

Un commutateur est un agent actif du réseau d'interconnexion qui reçoit en entrée des messages venant d'un ou plusieurs agents et qui achemine ou route chacun de ces messages respectivement vers leur agent de destination ou vers un autre commutateur. Ce routage est effectué au moyen de l'adresse de l'agent destinataire du message, dont l'adresse est présente dans l'entête du message à router. Un message est une suite de paquets de données.

A un noeud du réseau, un dispositif de sélection, ou d'arbitrage, permet de résoudre des conflits de partage de ces sections communes. Cette sélection ou arbitrage ne permet pas de garantir avec exactitude le temps de transfert de données à travers le réseau. L'arbitrage peut être effectué selon différents critères, devant tenir compte qu'une information ne doit jamais être définitivement bloquée sous peine de paralysie du réseau ("dead lock" en langue anglaise).

Un paquet de données peut être momentanément bloqué au niveau d'un noeud du réseau, au moyen d'une mémoire organisée en file d'attente. Pour éviter que la file d'attente n'ait une taille trop importante, due au stockage des données momentanément bloquées au niveau d'un noeud, il est possible de mettre en oeuvre un contrôle de flux.

Un contrôle de flux permet de transmettre un paquet de données, d'un agent source vers un agent destinataire, uniquement si l'agent destinataire a indiqué, par un signal, qu'il est prêt à recevoir des données.

Pour réaliser un contrôle de flux, il est donc souhaitable, pour un lien de communication unidirectionnel, transmettant des données d'un élément émetteur vers un élément récepteur, d'avoir un lien unidirectionnel de contrôle de flux pour transmettre, de l'élément récepteur vers l'élément émetteur, un signal indiquant que le récepteur est prêt à recevoir des données.

Pour qu'une information puisse être transmise entre un agent source et un agent destinataire, il est nécessaire d'établir, à un instant donné, un chemin physique entre l'agent source et l'agent destinataire. Si, à chaque couple agent source/agent destinataire, correspond un chemin physique déterminé, le routage dans le réseau est dit "statique".

On appelle "routage", le fait de définir un chemin au niveau d'un noeud du réseau, c'est-à-dire d'associer un lien entrant à un lien sortant.

Pour un routage statique, chaque noeud du réseau possède des tables de routage qui déterminent, pour chaque lien entrant, le lien sortant sur lequel il faut transmettre des données reçues par ledit lien entrant, en fonction de l'agent source et de l'agent destinataire.

Il est donc nécessaire que les informations représentatives de l'agent source et de l'agent destinataire soient associées à l'information à transmettre.

Pour optimiser l'utilisation de la bande passante, des informations supplémentaires sont associées à plusieurs mots à transmettre, ou paquets de données.

Un paquet est généralement constitué d'un entête d'un ou plusieurs mots, contenant par exemple une adresse d'un agent source et une adresse d'un agent destinataire, et un certain nombre de mots de données utiles. Le décodage de l'entête d'un paquet permet d'obtenir des informations nécessaires au routage de ce paquet. Un mot est composé d'une pluralité de bits.

Lors de la transmission d'informations entre un agent source et un agent destinataire, l'information ne peut pas prendre un chemin quelconque, car il est nécessaire que certaines informations soient reçues dans l'ordre avec lequel elles ont été émises.

Pour préserver l'ordre dans un flux d'informations, sans devoir réordonner les paquets de données du flux à l'arrivée, il faut que toutes ces informations suivent le même chemin.

Si deux informations prennent un chemin différent à travers le réseau, elles peuvent être retardées indépendamment l'une de l'autre, en fonction des arbitrages ou sélections au noeud qu'elles traversent, et donc arriver dans un ordre quelconque à l'agent destinataire. Le coût d'une remise en ordre des informations émises dans l'agent source à leur arrivée à l'agent destinataire, est élevé, en termes de temps calcul et mémoire.

Pour éviter ce coût de réordonnancement des paquets de données, il est souhaitable
qu'entre un agent source et un agent destinataire devant échanger des informations ordonnées, le chemin de transmission de ces informations soit toujours identique.

Un flux est un ensemble d'informations devant être transmises sans altération de l'ordre entre un agent source et un agent destinataire. Pour un agent source et un agent destinataire donnés, il peut exister plusieurs flux de paquets de données.

Généralement, l'entête d'un paquet de données comprend l'adresse de l'agent source et l'adresse de l'agent destinataire, et permet de déterminer l'identifiant de flux auquel appartient le paquet. Dans un réseau à routage statique, le routage dépend uniquement des identifiants de flux.

Lorsqu'un routage dynamique est mis en oeuvre, le coût de réordonnancement des paquets correspond essentiellement à la quantité de données à mémoriser avant de pouvoir transmettre le bon paquet à destination, compte tenu du désordre pouvant être généré par le réseau. Un tel fonctionnement avec un réordonnancement final est généralement plus simple pour la mise en oeuvre du routage au niveau des noeuds du réseau, mais engendre un coût en mémoire élevé.

Les réseaux à routage statique sont plus faciles à concevoir et à utiliser, car l'architecture est définie au départ, et de simples tables de routage suffisent à les mettre en oeuvre.

Cependant, de tels réseaux doivent être surdimensionnés, car les chemins de transmission de données étant fixes, il n'est pas possible de les adapter en fonction de l'état du trafic. Il est donc nécessaire de dimensionner les liens en fonction du pire scénario possible, même si statistiquement ces liens sont peu utilisés.

De tels réseaux sont par exemple décrits dans les documents "IEEE Communication magazine, vol 28 n°10, oct 89 Distributed Dynamic Routing Schemes, Key et al p54-58, 63-64" et "Electronics and communication in Japan Part I vol 72 n°11 nov 89, Comparison of Stability for Various Routing-Procedures in Circuit-Switched Networks, Yokohira et al, p43-51"

Un but de l'invention est de proposer un système de routage statique de flux de paquets de données dans un réseau d'interconnexion, permettant d'éviter un tel surdimensionnement, et ce à faible coût.

Ainsi, selon un aspect de l'invention, il est proposé un système de routage statique de flux de paquets de données dans un réseau d'interconnexion. Le système comprend au moins un élément émetteur, un élément récepteur, et un faisceau de liens de communication unidirectionnels reliant ledit élément émetteur audit élément récepteur. Ledit élément émetteur est adapté pour émettre des paquets de données audit élément récepteur par ledit faisceau. Le système comprend, en outre, des moyens de détection d'un identifiant de flux d'un paquet de données, et des moyens de gestion de routage dynamique, adaptés pour maintenir l'ordre de sortie de paquets de données d'un même flux dudit élément récepteur identique à l'ordre d'arrivée desdits paquets audit élément émetteur.

Le système permet de maintenir identique l'ordre des paquets de données d'un même flux, en évitant le surcoût d'un réordonnancement des paquets à leur arrivée.

Dans un mode de réalisation préféré, lesdits moyens de gestion de routage dynamique comprennent des moyens de sélection pour sélectionner un nombre N de paquets de données en entrée de l'élément émetteur.

Ainsi le routage est fait simultanément pour un nombre N de paquets de données.

En d'autres termes, les moyens de gestion de routage dynamique comprennent des moyens de sélection pour effectuer un arbitrage des paquets de données à transférer.

Avantageusement, lesdits moyens de gestion de routage dynamique comprennent :
- des mémoires tampon associées en correspondance biunivoque aux liens dudit faisceau,
- N ensembles de moyens de régie, les moyens de régie d'un ensemble étant associés en correspondance biunivoque auxdites mémoires tampon, et adaptés pour mémoriser, dans la mémoire tampon associée, les identifiants de flux des paquets en cours de transfert dans le lien correspondant, et pour éliminer dans ladite mémoire tampon associée, les identifiants de flux dépourvus de paquets en cours de transfert dans le lien correspondant,
- N ensembles de comparateurs, les comparateurs d'un ensemble étant associés en correspondance biunivoque aux éléments de base desdites mémoires tampon, et adaptés pour déterminer si un paquet à transmettre possède un identifiant de flux compris dans une desdites mémoires tampon.

Un élément de base desdites mémoires tampon correspond à un emplacement mémoire d'une mémoire tampon utilisé pour stocker un identifiant de flux.

Le système permet, lors de la transmission d'un paquet de données d'un flux dans le faisceau, de déterminer si un autre paquet de données du même flux est en cours de transfert sur un lien du faisceau, et dans ce cas de déterminer le lien sur lequel a lieu ce transfert.

A un instant donné, un paquet de données d'un flux est en cours de transfert dans au plus un lien dudit faisceau de lien.

Dans un mode de réalisation, lesdits moyens de gestion de routage dynamique sont adaptés, lorsqu'un desdits comparateurs détermine la présence de l'identifiant de flux d'un paquet sélectionné dans la mémoire tampon associée, pour router ledit paquet de données sélectionnées sur le lien correspondant du faisceau.

En d'autres termes, les paquets de données d'un même flux sont transférés sur le même lien du faisceau, ce qui garantit que l'ordre de sortie de paquets de données d'un même flux de l'élément récepteur est identique à l'ordre de réception de ces paquets de données par l'élément émetteur.

Dans un autre mode de réalisation, lesdits moyens de gestion de routage dynamique sont adaptés pour maintenir en attente de routage un paquet de données sélectionné, tant qu'un desdits comparateurs détermine la présence de l'identifiant de flux dudit paquet dans ladite mémoire tampon associée.

En d'autres termes, lorsqu'un paquet de données d'un flux est en cours de transfert sur un lien du faisceau, et qu'un autre paquet de données du même flux est sélectionné, les moyens de gestion de routage dynamique le maintiennent en attente jusqu'à ce que l'autre paquet de données du même flux ait été transféré. Ainsi, lorsque le paquet de données sera transféré, les moyens de gestion de routage dynamique pourront le transférer sur l'un quelconque des liens du faisceau de lien, et tenir compte du trafic sur les différents liens du faisceau. Ce mode de réalisation permet de bien répartir la charge de trafic de données dans l'ensemble des liens du faisceau de lien.

En outre, lesdits moyens de gestion de routage dynamique sont adaptés pour router un paquet de données sélectionné, lorsqu'aucun desdits comparateurs ne détermine la présence de l'identifiant de flux dudit paquet dans ladite mémoire tampon associée, en fonction d'informations du paquet différentes de l'identifiant de flux.

La gestion du trafic sur les liens du faisceau de lien peut alors être optimisée en fonction de critères particuliers.

Par exemple, lesdites informations du paquet différentes de l'identifiant de flux comprennent un identifiant d'un zone de mémoire et/ou un identifiant d'opérations à effectuer. Cela est particulièrement utile lorsque l'élément récepteur est une mémoire vive dynamique de type DRAM.

Dans un mode de réalisation, lesdits moyens de gestion de routage dynamique sont adaptés pour router un paquet de données sélectionné en fonction du débit disponible dans les liens dudit faisceau, lorsqu'aucun desdits comparateurs ne détermine la présence de l'identifiant de flux dudit paquet dans lesdites mémoires tampon associées.

Il est alors tenu compte du débit disponible dans les différents liens du faisceau.

Par exemple, lesdits liens du faisceau sont des liens asynchrones ou mésochrones pour relier deux sous-systèmes localement synchrones.

Dans un mode de réalisation, au moins un lien dudit faisceau comprend des moyens de changement de format des données transférées.

Cela permet d'éviter des trous de données dans les requêtes en écriture. On entend par trou un intervalle entre deux tops de cadencement d'horloge non utilisé pour transmettre des données.

Selon un autre aspect de l'invention, il est également proposé un procédé de routage statique de flux de paquets de données dans un réseau d'interconnexion. Un faisceau de liens de communication unidirectionnels reliant un élément émetteur à un élément récepteur, et ledit élément émetteur étant adapté pour émettre des paquets de données audit élément récepteur par ledit faisceau :
- on détecte un identifiant de flux d'un paquet de données, et
- on gère un routage dynamique de paquets dans ledit faisceau de liens, de manière à maintenir l'ordre de sortie de paquets de données d'un même flux dudit élément récepteur identique à l'ordre d'arrivée desdits paquets audit élément émetteur.

Avantageusement, on sélectionne un nombre N de paquets de données en entrée de l'élément émetteur.

Dans un mode de mise en oeuvre, on gère le routage dynamique en utilisant des mémoires tampon associées en correspondance biunivoque auxdits liens dudit faisceau. On régit lesdites mémoires tampon par mémorisation dans la mémoire tampon associée des identifiants de flux des paquets en cours de transfert dans le lien correspondant, et on élimine, dans ladite mémoire tampon associée, des identifiants de flux dépourvus de paquets en cours de transfert dans le lien correspondant, et on détermine si un paquet à transmettre possède un identifiant de flux compris dans une desdites mémoires tampon.

Dans un mode de mise en oeuvre, on route un paquet de données sélectionné, lorsqu'on détermine la présence de l'identifiant de flux dudit paquet dans une desdites mémoires tampon, sur le lien correspondant à ladite mémoire tampon.

Lorsque l'identifiant de flux dudit paquet de données n'est détecté dans aucune desdites mémoires tampon, le choix du lien du faisceau pour transférer le paquet de données peut être libre.

Dans un autre mode de mise en oeuvre, on maintient un paquet de données sélectionné en attente de routage tant que la présence de l'identifiant de flux dudit paquet est détecté dans une desdites mémoires tampon.

En outre, on route un paquet de données sélectionné, lorsque l'identifiant de flux dudit paquet n'est détecté dans aucune desdites mémoires tampon, en fonction d'informations du paquet différentes de l'identifiant de flux.

Par exemple, lesdites informations du paquet différentes de l'identifiant de flux comprennent un identifiant d'une zone de mémoire et/ou un identifiant d'opération à effectuer.

Avantageusement, on route un paquet de données sélectionné, lorsque l'identifiant de flux dudit paquet n'est détecté dans aucune desdites mémoires tampon, en fonction du débit disponible dans les liens dudit faisceau.

D'autres buts, caractéristiques et avantages de l'invention apparaîtront à la lecture de la description suivante, de quelques exemples nullement limitatifs, et faite en référence aux dessins annexés, sur lesquels :
- la figure 1 est un schéma synoptique d'un mode de réalisation d'un système selon un aspect de l'invention ; et
- les figures 2, 3 et 4 sont des schémas synoptiques d'autres modes de réalisations d'un système selon un aspect de l'invention;

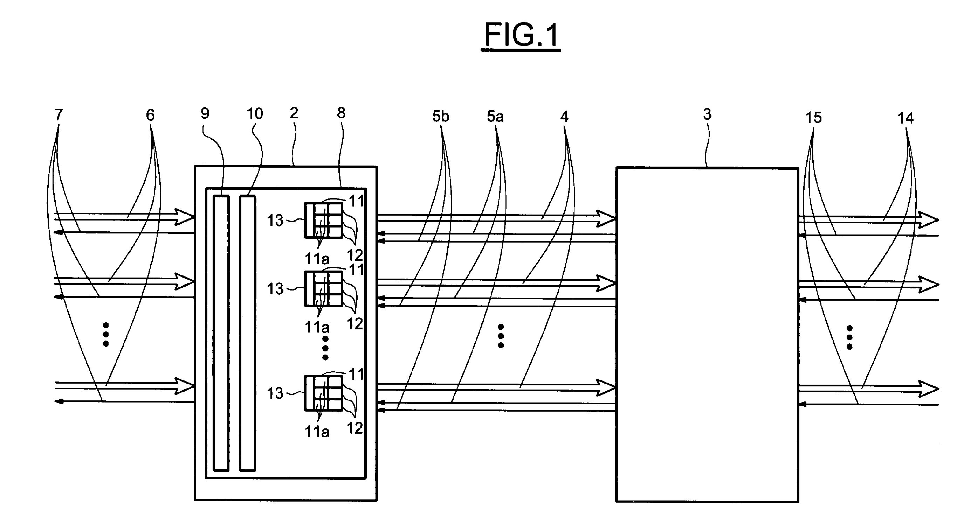

Tel qu'illustré sur la figure 1, le système 1 comprend un élément émetteur 2 et un élément récepteur 3. L'élément émetteur 2 est un élément de commutation.

Un faisceau de liens de communication unidirectionnels 4 relie l'élément émetteur 2 et l'élément récepteur 3.

A chaque lien de communication unidirectionnel du faisceau 4, est associé un lien unidirectionnel de contrôle de flux 5a reliant l'élément récepteur 3 et l'élément émetteur 2. En d'autres termes, le système comprend une pluralité de paires de liens de sens opposés reliant l'élément émetteur 2 et l'élément récepteur 3.

L'élément émetteur 2 comprend des liens d'entrée unidirectionnels 6 munis chacun d'un lien unidirectionnel 7 de contrôle de flux de sens opposé.

L'élément émetteur 2 comprend un module de gestion de routage dynamique 8 adapté pour gérer le routage des paquets de données à transmettre de l'élément émetteur 2 à l'élément récepteur 3 par le faisceau 4 de liens de communication unidirectionnels.

Le module de gestion de routage dynamique 8 peut, par exemple, être mis en oeuvre par un logiciel ou un circuit spécifique.

Le module de gestion de routage dynamique 8 comprend un module de détection 9 d'un identifiant de flux et un module de sélection 10 de paquets de données à transmettre.

Le module de détection 9 et le module de sélection 10 peuvent, par exemple, être respectivement mis en oeuvre par un logiciel ou un circuit spécifique.

Dans la suite de la description, on considère que le module de sélection 10 sélectionne un seul paquet de données, mais bien entendu, l'invention concerne également un module de sélection sélectionnant plusieurs paquets de données simultanément.

Le module de gestion de routage dynamique 8 comprend en outre des mémoires tampon 11 associées en correspondance biunivoque aux liens de communication unidirectionnels du faisceau 4. Les mémoires tampon sont, dans cet exemple, organisées en file d'attentes de type FIFO ("First In First Out" en langue anglaise).

En d'autres termes, chaque lien de communication unidirectionnel du faisceau 4 est associé à une unique file d'attente 11, et une file d'attente 11 est associée à un unique lien de communication unidirectionnel du faisceau 4.

A chaque lien de communication unidirectionnel du faisceau 4, est associé un lien unidirectionnel de contrôle 5b par l'élément récepteur 3 de la file d'attente 11 associée. Ainsi, l'élément récepteur 3 peut rendre compte de l'arbitrage effectué d'un paquet de données transféré sur un lien du faisceau 4, afin que la file d'attente associée 11 puisse éliminer l'identifiant de flux du paquet de la file d'attente 11.

En outre, des comparateurs 12 sont associés en correspondance biunivoque aux éléments de base 11a des files d'attente 11, et des modules de régie 13 sont associés en correspondance biunivoque aux files d'attente 11. L'élément émetteur 2 comprend les comparateurs 12 et les modules de régie 13.

Un élément de base d'une file d'attente 11 est un emplacement mémoire utilisé pour stocker un identifiant de flux.

Pour des modes de réalisation dans lesquels les moyens de sélection 10 sélectionnent plusieurs paquets de données à traiter simultanément, pour chaque paquet sélectionné, des comparateurs 12 sont associés en correspondance biunivoque aux éléments de base des files d'attente 11, et des modules de régie 13 sont associés en correspondance biunivoque aux files d'attente 11.

Les comparateurs 12 et les modules de régie 13 peuvent, par exemple, être respectivement mis en oeuvre par un logiciel ou un circuit spécifique.

L'élément émetteur 2 peut être un agent source du réseau associé à un élément de commutation. L'élément récepteur 3 peut être un élément de commutation associé à un élément destinataire.

Un agent source peut être initiateur de messages, un agent destinataire peut être une destination de messages, et un élément de commutation peut être un intermédiaire de transmission de messages.

L'élément récepteur 3 comprend des liens de sortie unidirectionnels 14 munis chacun d'un lien unidirectionnel 15 de contrôle de flux de sens opposé.

L'élément émetteur 2 étant un élément de commutation, il comprend des liens de sortie, non représentés sur la figure 1, pour transmettre des données à d'autres éléments de commutation ou d'autres éléments destinataires que l'élément récepteur 3.

Au niveau des tables de routage, le faisceau de liens est considéré comme un lien unique, ainsi, vu des tables de routages, le routage est considéré comme statique.

Les paquets de données appartenant à divers flux de données arrivent à l'élément émetteur 2 par les liens d'entrée 6. Un flux de données est un ensemble de données transmises d'un élément source à un élément destinataire. Les paquets de données appartenant à un même flux de données comprennent un identifiant de flux identique.

Le module de détection 9 d'identifiant de flux est adapté pour déterminer l'identifiant de flux des paquets arrivant à l'élément émetteur 2.

Le module de sélection ou module d'arbitrage 10 est adapté pour sélectionner au moins un paquet de données en entrée de l'élément émetteur 2, à traiter par le module de gestion de routage dynamique 8.

Le module de sélection 10 fonctionne de manière classique.

Pour chaque paquet de données sélectionné et dont on connaît l'identifiant de flux par le module de détection 9, les comparateurs 12 déterminent s'il existe une file d'attente 11 comprenant l'identifiant de flux du paquet. En d'autres termes, les comparateurs 12 permettent de déterminer s'il existe un paquet appartenant au même flux de données qu'un paquet à transférer, qui est en cours de transfert sur un lien du faisceau 4, et permettent, le cas échéant, d'identifier sur quel lien.

Si un comparateur 12 permet de déterminer qu'un paquet de données, appartenant au même flux que le paquet à traiter, est en cours de transfert sur le lien correspondant associé au comparateur, plusieurs traitements de ce paquets sont possible, en fonction du fonctionnement du module de gestion de routage dynamique 8, dépendant de la réalisation du module de gestion de routage dynamique 8.

Dans un premier mode de réalisation, le module de gestion de routage dynamique 8 route le paquet de données sélectionné sur le lien du faisceau 4 ayant la file d'attente 11 associée qui comprend l'identifiant de flux du paquet de données. Ainsi, l'ordre de transfert des paquets de données d'un même flux est respecté.

Dans un autre mode de réalisation, lorsqu'un comparateur 12 détecte, pour un paquet de données sélectionné, un autre paquet de données du même flux, en cours de transfert sur le lien correspondant, le module de gestion de routage dynamique 8 maintient en attente de routage le paquet de données sélectionné tant que le paquet de données en cours de transfert ayant le même identifiant de flux est en cours de transfert.

Ainsi, l'ordre de transfert des paquets de données d'un même flux est respecté.

Les modules de régie 13 sont chacun adaptés pour mémoriser dans leur file d'attente 11 associée, l'identifiant de flux d'un paquet de données transféré par le module de gestion de routage dynamique 8 sur le lien correspondant, et pour éliminer dans la file d'attente associée l'identifiant d'un paquet de données terminant son transfert dans le lien correspondant du faisceau 4.

Pour un paquet de données sélectionné, lorsqu'aucun comparateur 13 ne détermine la présence d'un autre paquet de données du même flux en cours de transfert sur un lien du faisceau 4, après avoir ou non été maintenu en attente, plusieurs modes de réalisation du module de gestion de routage dynamique 8 sont possibles.

Dans un premier mode de réalisation, le paquet de données sélectionné est routé en fonction d'informations du paquet différentes de l'identifiant de flux, par exemple un identifiant d'une zone mémoire et/ou un identifiant d'opérations à effectuer. En effet, par exemple, les différents liens de communication unidirectionnels du faisceau 4 peuvent être associés à des zones de mémoire déterminées de l'élément récepteur 3.

Dans un autre mode de réalisation, le module de gestion de routage dynamique 8 route le paquet de données sélectionné en fonction du débit disponible dans les liens de communication unidirectionnel du faisceau 4. En d'autres termes, le module de gestion de routage dynamique 8 route le paquet de données sélectionné dans le lien du faisceau 4 ayant le débit disponible le plus élevé.

Des paquets de données appartenant à un même flux de données ne peuvent provenir que d'un même lien d'entrée unidirectionnel 6. Donc lorsqu'un paquet de données de ce flux a été affecté à un lien de communication unidirectionnel du faisceau 4, et que le paquet de données n'a pas été traité par le module de sélection ou d'arbitrage 10, il ne peut y avoir une autre demande pour un paquet de données appartenant à ce flux.

En effet, une telle demande émanerait forcément du même lien d'entrée unidirectionnelle 6, et celui-ci reste indisponible tant que le paquet de données reste en attente. Il ne peut donc y avoir deux paquets de données d'un même flux en attente de routage dans le système. Par contre, lorsqu'on détecte qu'un paquet de données d'un flux est en cours de transfert dans un lien de communication unidirectionnel du faisceau 4, cela signifie qu'un paquet de données du même flux a été émis par l'élément émetteur 2, mais qu'il n'a pas encore subi d'arbitrage par l'élément récepteur 3.

Lorsque plusieurs paquets sont traités simultanément, chaque mémoire tampon 11 comprend un comparateur et un module de régie associé pour chacun des paquets traités simultanément.

Le nombre de liens d'entrée 6 de l'élément émetteur 2, le nombre de liens du faisceau 4, et le nombre de liens de sortie de l'élément récepteur 3 sont indépendant les uns des autres.

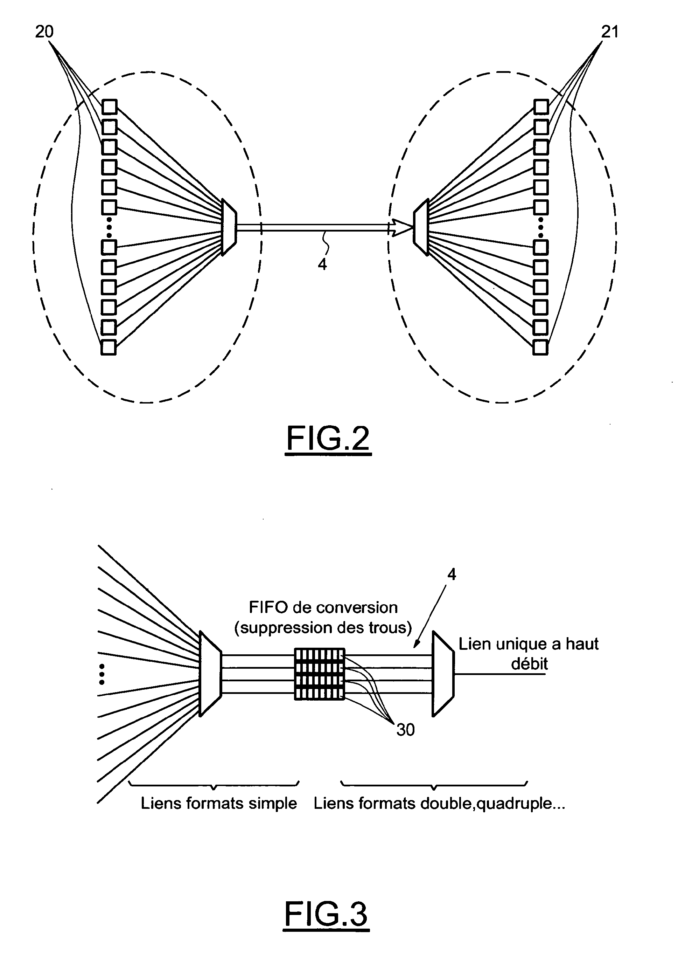

Sur la figure 2, de nombreux agents 20 doivent communiquer avec de nombreux agents 21. Chaque agent 20, pris séparément, transfère un faible débit de données, mais la somme des débits de données de l'ensemble des agents 20 est importante. L'invention permet d'éviter d'avoir plusieurs liens en parallèle et d'affecter à chacun des liens parallèles un sous-groupe d'agents. En effet, le faisceau de liens permet d'éviter la présence d'une file d'attente pour chaque agent 20 permettant de stocker un paquet complet de données avant de pouvoir l'envoyer, ceci afin d'éviter des trous dans les messages, car chaque flux a son lien du faisceau dédié à un instant donné.

La table de routage interne au faisceau de liens est construite dynamiquement, ce qui permet de l'adapter en fonction des différents débits de données transférées sur le réseau.

Le choix d'un lien du faisceau ne dépend ni de l'élément émetteur, ni de l'élément destinataire, mais respecte l'ordre des paquets de données d'un flux.

L'invention s'applique à tous les modes de transports de paquets de données, par exemple les transports synchrones, asynchrones, ou mésochrones.

Dans l'exemple de la figure 2, chaque agent émetteur transmet des paquets de données avec de larges trous entre les paquets de données. Dans les liens du faisceau 4, plusieurs flux sont présents, et un trou de données entre les paquets d'un même flux peut être utilisé par d'autres flux, ce qui permet une optimisation de l'utilisation de la bande passante disponible.

La figure 3 illustre un faisceau de lien comprenant des files d'attente 30, permettant de changer la taille des mots utilisés. Le faisceau 4 permet d'écrire dans les files d'attente 30, permettant d'éliminer les trous de données à bas débit, et de lire dans lesdites files d'attente 30 à haut débit. Le routage dynamique dans les liens du faisceau 4 permet de distribuer le trafic de données de façon homogène sur les différentes files d'attente 30.

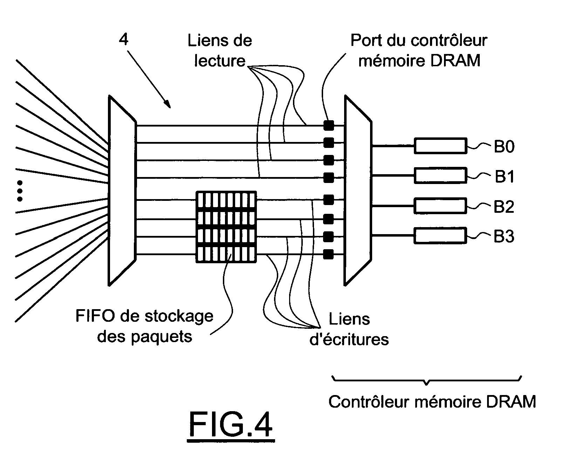

Sur la figure 4, l'élément récepteur est un contrôleur de mémoire de type DRAM, comprenant quatre parties ou banques de mémoire B0, B1, B2 et B3. Quatre liens du faisceau 4 sont des liens d'écriture munis chacun d'une file d'attente de stockage de paquets, car un contrôleur mémoire de type DRAM ne comprend pas de moyens de contrôle de flux. Le faisceau 4 comprend en outre quatre liens de lecture permettant d'effectuer des lectures de données.

Il est alors possible d'une part de séparer les demandes d'accès en lecture des demandes d'accès en écriture, et d'autre part de pouvoir répartir les différentes requêtes sur les différentes banques mémoire B0, B1, B2 et B3.

Contrairement au routage statique par banque et type d'accès, on garde l'ordre d'exécution des requêtes dans les flux, et il est alors inutile d'ordonner les informations de sortie du contrôleur DRAM. L'invention permet alors d'avoir les avantages d'un routage statique par banque, sans en avoir les inconvénients de réordonnancement.

L'invention permet d'optimiser l'utilisation du débit disponible entre deux noeuds du réseau, sans nécessiter de réordonnancement des paquets de données lorsqu'ils arrivent à leur élément de destination.

## Revendications

1. Système de routage statique de flux de paquets de données dans un réseau d'interconnexions, **caractérisé en ce qu'**il comprend :
- au moins un élément émetteur (2), un élément récepteur (3), et un faisceau (4) de liens de communication unidirectionnels reliant ledit élément émetteur (2) audit élément récepteur (3), ledit élément émetteur (2) étant adapté pour émettre des paquets de données audit élément récepteur (3) par ledit faisceau (4),
- des moyens de détection (9) d'un identifiant de flux d'un paquet de données, et
- des moyens de gestion de routage dynamique (8), adaptés pour maintenir l'ordre de sortie de paquets de données d'un même flux dudit élément récepteur (3) identique à l'ordre d'arrivée desdits paquets audit élément émetteur (2).

2. Système selon la revendication 1, dans lequel lesdits moyens de gestion de routage dynamique (8) comprennent des moyens de sélection (10) pour sélectionner un nombre N de paquets de données en entrée de l'élément émetteur (2).

3. Système selon la revendication 2, dans lequel lesdits moyens de gestion de routage dynamique (8) comprennent :
- des mémoires tampon (11) associées en correspondance biunivoque aux liens dudit faisceau (4),
- N ensembles de moyens de régie (13), les moyens de régie d'un ensemble étant associés en correspondance biunivoque auxdites mémoires tampon (11), et adaptés pour mémoriser, dans la mémoire tampon associée, les identifiants de flux des paquets en cours de transfert dans le lien correspondant, et pour éliminer, dans ladite mémoire tampon associée, les identifiants de flux dépourvus de paquets en cours de transfert dans le lien correspondant, et
- N ensembles de comparateurs (12), les comparateurs d'un ensemble étant associés en correspondance biunivoque aux éléments de base (11a) desdites mémoires tampon (11), et adaptés pour déterminer si un paquet à transmettre possède un identifiant de flux compris dans une desdites mémoires tampon (11).

4. Système selon l'une quelconque des revendications 1 à 3, dans lequel lesdits moyens de gestion de routage dynamique (8) sont adaptés, lorsqu'un desdits comparateurs (12) détermine la présence de l'identifiant de flux d'un paquet sélectionné dans la mémoire tampon associée, pour router ledit paquet de données sélectionné sur le lien correspondant du faisceau (4).

5. Système selon l'une quelconque des revendications 1 à 3, dans lequel lesdits moyens de gestion de routage dynamique (8) sont adaptés pour maintenir en attente de routage un paquet de données sélectionné, tant qu'un desdits comparateurs (12) détermine la présence de l'identifiant de flux dudit paquet sélectionné dans ladite mémoire tampon associée.

6. Système selon l'une quelconque des revendications 1 à 5, dans lequel lesdits moyens de gestion de routage dynamique (8) sont adaptés pour router un paquet de données sélectionné, lorsqu'aucun desdits comparateurs ne détermine la présence de l'identifiant de flux dudit paquet dans la mémoire tampon associée, en fonction d'informations du paquet différentes de l'identifiant de flux.

7. Système selon la revendication 6, dans lequel lesdites informations du paquet différentes de l'identifiant de flux comprennent un identifiant d'une zone de mémoire et/ou un identifiant d'opération à effectuer.

8. Système selon l'une quelconque des revendications 1 à 5, dans lequel lesdits moyens de gestion de routage dynamique (8) sont adaptés pour router un paquet de données sélectionné en fonction du débit disponible dans les liens dudit faisceau (4), lorsqu'aucun desdits comparateurs ne détermine la présence de l'identifiant de flux dudit paquet dans lesdites mémoires tampon associées (11).

9. Système selon l'une quelconque des revendications précédentes, dans lequel lesdits liens du faisceau (4) sont des liens asynchrones ou mésochrones pour relier deux sous-systèmes localement synchrones.

10. Système selon l'une quelconque des revendications précédentes, dans lequel au moins un lien dudit faisceau (4) comprend des moyens de changement de format (30) des données transférées.

11. Procédé de routage statique de flux de paquets de données dans un réseau d'interconnexions, **caractérisé en ce que**, un faisceau (4) de liens de communication unidirectionnels reliant un élément émetteur (2) à un élément récepteur (3), et ledit élément émetteur (2) étant adapté pour émettre des paquets de données audit élément récepteur (3) par ledit faisceau (4) :
- on détecte un identifiant de flux d'un paquet de données, et
- on gère un routage dynamique de_paquets dans ledit faisceau (4) de liens de manière à maintenir l'ordre de sortie de paquets de données d'un même flux dudit élément récepteur (3) identique à l'ordre d'arrivée desdits paquets audit élément émetteur (2).

12. Procédé selon la revendication 11, dans lequel on sélectionne un nombre N de paquets de données en entrée de l'élément émetteur (2).

13. Procédé selon la revendication 12, dans lequel on gère le routage dynamique
en utilisant des mémoires tampon (11) associées en correspondance biunivoque auxdits liens dudit faisceau (4),
en régissant lesdites mémoires tampon (11) par mémorisation dans la mémoire tampon associée des identifiants de flux des paquets en cours de transfert dans le lien correspondant, et par élimination, dans ladite mémoire tampon associée, des identifiants de flux dépourvus de paquets en cours de transfert dans le lien correspondant, et
en déterminant si un paquet à transmettre possède un identifiant de flux compris dans une desdites mémoires tampon (11).

14. Procédé selon l'une quelconque des revendications 11 à 13, dans lequel on route un paquet de données sélectionné, lorsqu'on détermine la présence de l'identifiant de flux dudit paquet dans une desdites mémoires tampon (11), sur le lien correspondant à ladite mémoire tampon.

15. Procédé selon l'une quelconque des revendications 11 à 13, dans lequel on maintient un paquet de données sélectionné en attente de routage tant que la présence de l'identifiant de flux dudit paquet est détecté dans une desdites mémoires tampon (11).

16. Procédé selon l'une quelconque des revendication 11 à 15, dans lequel on route un paquet de données sélectionné, lorsque l'identifiant de flux dudit paquet n'est détecté dans aucune desdites mémoires tampon (11), en fonction d'informations du paquet différentes de l'identifiant de flux.

17. Procédé selon la revendication 16, dans lequel lesdites informations du paquet différentes de l'identifiant de flux comprennent un identifiant d'une zone de mémoire et/ou un identifiant d'opération à effectuer.

18. Procédé selon l'une quelconque des revendications 11 à 15, dans lequel on route un paquet de données sélectionné, lorsque l'identifiant de flux dudit paquet n'est détecté dans aucune desdites mémoire tampon (11), en fonction du débit disponible dans les liens dudit faisceau (4).
